# EUROPÄISCHE PATENTSCHRIFT

(11) **EP 1 505 307 B1**
(45) Veröffentlichungstag und Bekanntmachung des Hinweises auf die Patenterteilung: **12.10.2011**
(21) Anmeldenummer: 04018420.2
(22) Anmeldetag: 04.08.2004
(51) Int. Cl.: F16C 33/78

(54) **Abdichtung für Radialwälzlager**
Sealing for radial roller bearing
Garniture d'étanchéité pour palier radial à roulement

(30) Priorität: 05.08.2003 DE 10335713
(43) Veröffentlichungstag der Anmeldung: 09.02.2005
(73) Patentinhaber: Schaeffler Technologies GmbH & Co. KG, 91074 Herzogenaurach (DE)
(72) Erfinder: Niebling, Peter, 97688 Bad Kissingen (DE); Masur, Ernst, 97508 Untereuerheim (DE)

(56) Entgegenhaltungen:
- DE-A- 10 125 253
- DE-A- 10 163 068
- US-A- 4 043 620
- US-A- 5 564 839

## Beschreibung

### Anwendungsgebiet der Erfindung

Die Erfindung betrifft eine Abdichtung für Radialwälzlager nach dem Oberbegriff des Anspruchs 1.

### Hintergrund der Erfindung

Abdichtungen für Radialwälzlager sind in den unterschiedlichsten Ausführungsformen bekannt. Im wesentlichen wird dabei angestrebt, ein Radialwälzlager, umfassend einen Innenring und einen Außenring sowie dazwischen in einem sogenannten Käfig gleichmäßig verteilt angeordnete Wälzkörper, mittels seitlich angeordneter Dichtelemente gegen ein Eindringen von Umgebungsschmutz beziehungsweise gegen das Austreten von Schmiermittel abzudichten.

Das Dichtelement besteht in der Regel aus einem radial angeordneten elastischen Dichtring, der seinerseits von einem sogenannten Schleuderblech oder Anlaufring axial nach außen begrenzt ist, an welchem eine oder mehrere Dichtlippen des Dichtelements/Dichtrings im montierten Zustand zur Anlage gebracht sind.

Mit der DE 33 20 063 A1 wird eine solche gattungsgemäße Abdichtung für ein Radialwälzlager offenbart, bei der der Dichtring und das Schleuderblech mittels eines den äußeren Umfang des Schleuderblechs übergreifenden Vorsprungs einer den Dichtring versteifenden Versteifungsscheibe eine unverlierbare Baueinheit bilden sollen.

In der Praxis hat sich jedoch bezüglich der vorstehenden Ausführungsform herausgestellt, dass der Verbund zwischen dem Dichtring und dem Schleuderblech nicht Immer gewährleistet ist, so dass sich die beiden Bauteile voneinander lösen und eine die Dichtwirkung beeinträchtigende Verschmutzungen auftreten kann.

Ferner hat sich gezeigt, dass bei einem Abspringen einer Dichtlippe von dem Schleuderblech während der Montage eine nachträgliche Korrektur nur mit großem Aufwand oder infolge von unvermeidbaren Beschädigungen am Dichtring überhaupt nicht mehr möglich ist, so dass gegebenenfalls die gesamte Baueinheit verschrottet und durch eine neue ersetzt werden muss.

Zudem wird die Ausbildung des L-förmigen Schleuderbleches gemäß der DE 33 2 0 063 A1 als risikobehaftet eingeschätzt, da die nach innen weisende Dichtlippe während der Montage über eine Innenkante des axial angeordneten Schenkels des Schleuderbleches geführt werden muss, und es demgemäss zu Beschädigungen an der besagten Dichtlippe kommen kann, was im Ergebnis zu einer Beeinträchtigung der Dichtwirkung führt.

Schließlich ist durch die DE 198 53 187 A1 eine andere aus mehreren Einzelteilen zusammengesetzte Abdichtung für ein Radialwälzlager bekannt, welche sich von vorstehender Ausführungsform Insbesondere dadurch unterscheidet, dass die Unverllerbarkeit der Baueinheit durch einen elastischen Vorsprung des Dichtrings realisiert ist, der das Schleuderblech axial hintergreift. Ferner ist die Innenkante des axial angeordneten Schenkels des L-förmigen Schleuderblechs mit einem geringfügigen Radius versehen.

Weiterhin ist aus der DE 101 63 068 A1 eine Radialwälzlagerabdichtung bekannt, bei der das Dichtelement und das Schleuderblech getrennt voneinander ausgebildet und montiert sind, wobei das Schleuderblech L-förmig mit einem zu den Wälzkörpern gerichteten Schenkel mit zwei übereinander liegenden zylindrischen Wänden ausgebildet ist, gemäß dem Oberbegriff des Anspruchs 1.

Was die Unverlierbarkeit der einzelnen Bauteile dieses Bauteilverbünde anbelangt, sind hier dieselben Missstände wie beim erstgenannten Beispiel aus dem Stand der Technik zu verzeichnen. Auch die Ausbildung des L-förmigen Schleuderbleches, insbesondere dessen Schenkels, wird noch nicht als zufriedenstellend eingeschätzt, da insbesondere die mittlere Dichtlippe noch nicht ausreichend vor einem Verkanten und/oder Umklappen während der Montage der Baueinheit bewahrt wird.

Ebenso ist bei beiden bekannten technischen Lösungen infolge der vorgegebenen Beabstandung des Dichtelementes zum Schleuderblech eine Korrektur der Vorspannung der Dichtlippen in Anpassung an bestimmte Anwendungsfälle kaum realisierbar.

### Aufgabe der Erfindung

Die Aufgabe der Erfindung ist es demgemäss, eine verbesserte Abdichtung für ein Radialwälzlager zu schaffen, die eine einfache Montage und Austauschbarkeit von Einzelbauteilen ermöglicht sowie Korrekturen bezüglich der Anordnung der Dichtlippen zum Schleuderblech zulässt.

### Lösung der Aufgabe

Erfindungsgemäß wird die Aufgabe in Verbindung mit den Merkmalen im Oberbegriff des Anspruchs 1 dadurch gelöst, dass der erste Abschnitt eine Schrägstellung einnimmt, sodass während der Montage des Schleuderbleches und des zur Anlage bringen der Dichtlippe am zugeordneten Abschnitt desselben ein Verkanten und/oder Schiefstellen und/oder Umschlagen der Dichtlippe vermieden wird.

Gemäß einer ersten bevorzugten Ausführungsform weist der besagte Schenkel zunächst einen nach innen geführten, radial außenliegenden ersten Abschnitt zur Anlage der Dichtlippe, und nachfolgend einen umgebogenen, beziehungsweise zurückgeführten und einen Führungsradius ausbildenden radial innenliegenden zweiten Abschnitt für den Presssitz mit dem Innenring auf.

Eine zweite Ausführungsform sieht vor, dass der besagte Schenkel zunächst einen nach innen geführten, radial innenliegenden ersten Abschnitt für den Presssitz mit dem Innenring und nachfolgend einen umgebogenen beziehungsweise zurückgeführten und einen Führungsradius ausbildenden radial außenliegenden zweiten Abschnitt zur Anlage der Dichtlippe aufweist.

Die beiden Abschnitte des L-förmig ausgebildeten Schenkels des Schleuderbleches sind in einem bestimmten Winkel "α" zueinander angeordnet. Der Winkel "α" ist dabei vorzugsweise in einem Bereich von ca. 5° bis ca. 30° gewählt, vorzugsweise beträgt er ca. 15°.

Die Vorteile der vorliegenden Erfindung werden im Hinblick auf den Stand der Technik insbesondere in der einfachen und kostengünstigen Montage sowie der getrennten Austauschbarkeit der Einzelbauteile Dichtelement und Schleuderblech gesehen.

Weiterhin lässt sich in Abhängigkeit vom gewählten Anwendungsfall die Vorspannung der Dichtlippen in weiten Grenzen einstellen, indem lediglich das Schleuderblech axial auf dem Innenring bewegt wird. Hierdurch kann die Reibung zwischen den in Rede stehenden Bauteilen auf ein Minimum reduziert werden. Diesen Vorteil bieten die in der Beschreibungseinleitung gewürdigten Dichtkonzepte nicht, da bei diesen durch die Ausbildung der Abdichtung als unverlierbare Baueinheit bereits eine bestimmte Voreinstellung getroffen wurde.

### Kurze Beschreibung der Zeichnung

Die Erfindung wird nachstehend anhand der in den Zeichnungen schematisch dargestellten Ausführungsbeispielen näher erläutert. Es zeigen
- Fig. 1: einen teilweisen Axialschnitt durch ein Radialwälzlager mit einer bekannten Abdichtung
- Fig. 2: das Radialwälzlager nach Fig. 1 mit einer zweiten bekannten Abdichtung.
- Fig. 3: das Radialwälzlager nach Fig. 1 mit einer erfindungsgemäß ausgestalten Abdichtung gemäß einer ersten Ausführungsform, und
- Fig. 4: das Radialwälzlager nach Fig. 1 mit einer erfindungsgemäß ausgestalten Abdichtung gemäß einer zweiten Ausführungsform.

### Ausführliche Beschreibung der Zeichnungen

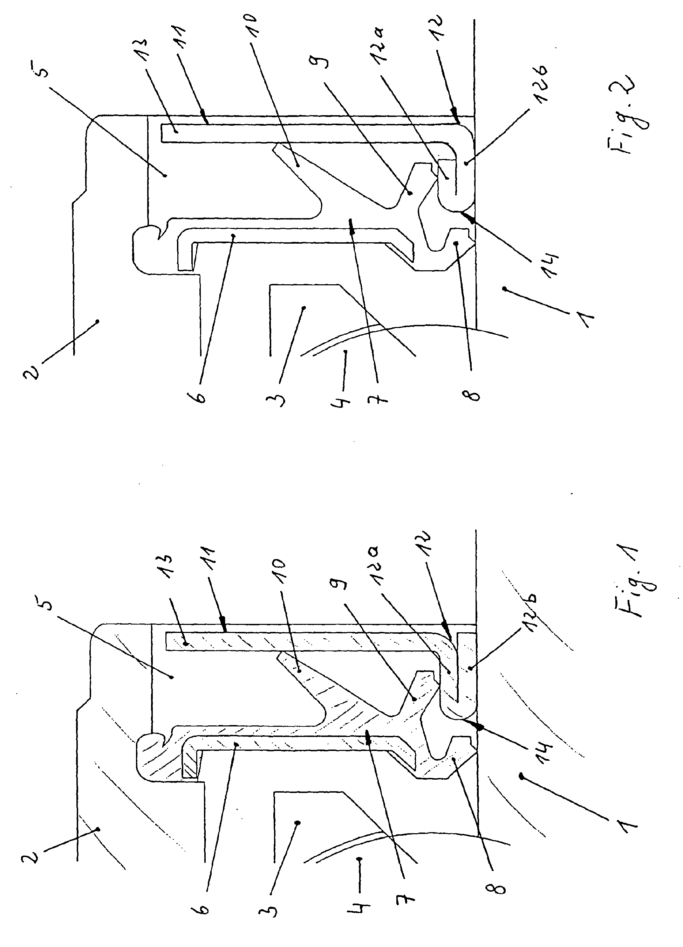

Fig. 1 zeigt schematisch einen teilweisen Axialschnitt durch ein an sich bekanntes Radialwälzlager mit einem Innenring 1 und einem Außenring 2 sowie dazwischen in einem sogenannten Käfig 3 angeordneten Wälzkörpern 4.

Seitlich der Wälzkörper 4 erstreckt sich in einem Freiraum 5 zwischen dem Innenring 1 und dem Außenring 2 ein radial angeordnetes und mit einer Versteifungsscheibe 6 versehenes Dichtelement 7 in Form eines Dichtringes mit drei radial übereinander angeordneten Dichtlippen 8, 9, 10.

Wie Fig. 1 weiter entnommen werden kann, ist dem Dichtelement 7 ein dieses Dichtelement 7 axial nach außen begrenzendes und im Teilquerschnitt L-förmiges Schleuderblech 11 zugeordnet, welches seinerseits mittels eines axial nach innen beziehungsweise zu den Wälzkörpern 4 gerichteten Schenkels 12 durch einen Presssitz mit dem Innenring 1 verbunden ist.

Vorliegend ist auf dem Schenkel 12 des Schleuderblechs 11 die mittlere Dichtlippe 9 zur Anlage gebracht. Ferner sind die radial innen angeordnete Dichtlippe 8 auf dem Innenring 1 und die radial außen angeordnete Dichtlippe 10 am radialen Abschnitt 13 des Schleuderblechs 11 zur Anlage gebracht.

Im Hinblick auf denjenigen Stand der Technik, der sogenannte unverlierbare Abdichtungen (Dichtungskassetten) favorisiert, sind hier davon abweichend das Dichtelement 7 und das Schleuderblech 11 erfindungsgemäß getrennt voneinander ausgebildete und montierbare Bauteile.

Durch diese Maßnahme besteht die Möglichkeit, in Abhängigkeit vom gewählten Anwendungsfall die Vorspannung insbesondere der Dichtlippen 9 und 10 in weiten Grenzen einzustellen, indem lediglich das Schleuderblech 11 axial unterschiedlich weit auf den Innenring 1 gegen diese Dichtlippen 9, 10 aufgeschoben wird. Weitere Vorteile dieser besonderen Gestaltung sind bereits oben ausführlich beschrieben.

Um eine problemlose Montage des Schleuderbleches 11 auf dem Innenring 1 und gegen die Dichtlippen 9 und 10, insbesondere jedoch gegen die mittlere Dichtlippe 9 zu gewährleisten, weist der zu den Wälzkörpern 4 hin gerichtete Schenkel 12 sowohl einen Abschnitt 12a, an welchem die besagte Dichtlippe 9 zur Anlage kommt, als auch einen den Presssitz mit dem Innenring 1 realisierenden Abschnitt 12b auf.

Gemäß der in Fig. 1 gezeigten Form des Schenkels 12 weist derselbe zunächst einen axial nach innen geführten und radial außenliegenden ersten Abschnitt 12a zur Anlage der Dichtlippe 9, und nachfolgend einen umgebogenen beziehungsweise axial zurückgeführten sowie einen Führungsradius 14 ausbildenden radial innenliegenden zweiten Abschnitt 12b für den Presssitz mit dem Innenring 1 auf.

Durch den vergleichsweise groß ausgebildeten Führungsradius 14 im Bereich des freien Endes des Schenkels 12, bewerkstelligt durch das Zurückbiegen des Abschnittes 12b, ist vorteilhaft ein störungsfreies Aufgleiten der Dichtlippe 9 auf den Abschnitt 12a des Schenkels 12 sichergestellt, wodurch Beschädigungen der Dichtlippe 9 während der Montage der Abdichtung vermieden werden können. Vereinfacht dargestellt, fädelt sich die Dichtlippe 9 sozusagen auf den Schenkel 12 des Schleuderbleches 11 beziehungsweise auf dessen Abschnitt 12a regelrecht auf.

Eine weitere Form des Schenkels 12 des Schleuderbleches 11 ist in Fig. 2 gezeigt. Danach weist derselbe zunächst einen axial nach innen geführten, radial innenliegenden ersten Abschnitt 12b für den Presssitz mit dem Innenring 1 und nachfolgend einen umgebogenen beziehungsweise axial zurückgeführten und besagten Führungsradius 14 ausbildendenden radial außenliegenden zweiten Abschnitt 12a zur Anlage mit der Dichtlippe 9 auf.

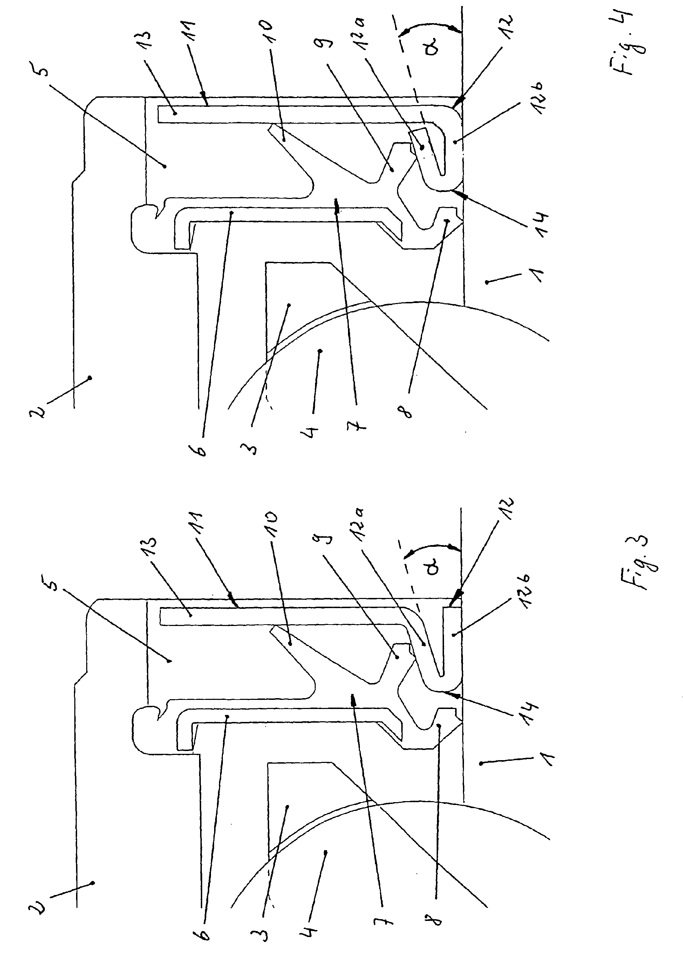

Was die erfindungsgemäßen Ausführungsformen nach Fig. 3 und 4 anbelangt, unterscheiden sich diese von den vorbeschriebenen dahingehend, dass die beiden Abschnitte 12a, 12b des L-förmig ausgebildeten Schenkels 12 derart in einem bestimmten Winkel "α" zueinander angeordnet sind, dass während der Montage des Schleuderblechs 11 und des zur Anlage bringen insbesondere der Dichtlippe 9 an demselben, ein Verkanten und/oder Schiefstellen und/oder Umschlagen derselben vermieden wird. Das heißt, der durch den relativ groß gewählten Führungsradius 14 erzielte Effekt wird durch die Schrägstellung des Abschnittes 12a, welcher zur Anlage mit der Dichtlippe 9 gebracht wird, noch unterstützt und gegebenenfalls sogar verstärkt.

In umfangreichen Versuchen haben sich Winkel "α" in einem Bereich von ca. 5° bis ca. 30° bewährt. Besonders gute Ergebnisse wurden mit einem Winkel "α" von ca. 15° erzielt.

### Bezugszeichenliste

- 1: Innenring
- 2: Außenring
- 3: Käfig
- 4: Wälzkörper
- 5: Freiraum
- 6: Versteifungsscheibe
- 7: Dichtelement
- 8: innere Dichtlippe
- 9: mittlere Dichtlippe
- 10: äußere Dichtlippe
- 11: Schleuderblech
- 12: Schenkel
- 12a: Abschnitt für die Anlage mit der Dichtlippe 9
- 12b: Abschnitt für Presssitz
- 13: radialer Abschnitt des Dichtelementes 7
- 14: Führungsradius

## Patentansprüche

1. Abdichtung für Radialwälzlager mit einem Innenring (1) und einem Außenring (2) sowie dazwischen angeordneten Wälzkörpern (4), wobei die Abdichtung ein radial angeordnetes, sich seitlich der Wälzkörper (4) in einem Freiraum (5) zwischen Innenring (1) und Außenring (2) erstreckbares Dichtelement (7) mit wenigstens einer Dichtlippe (9, 10) sowie ein mit dem Innenring (1) durch einen Presssitz verbindbares Schleuderblech (11) aufweist,
- wobei die wenigstens eine Dichtlippe (9, 10) an dem Schleuderblech (11) zur Anlage kommt,
- wobei das Dichtelement (7) und das Schleuderblech (11) getrennt voneinander ausgebildete und montierbare Bauteile sind und
- wobei das Schleuderblech (11) L-förmig mit einem zu den Wälzkörpern (4) ausrichtbaren Schenkel (12) ausgebildet ist, welcher Schenkel (12) sowohl einen ersten Abschnitt (12a) aufweist, an welchem die Dichtlippe (9) des Dichtelementes (7) zur Anlage kommt, als auch einen den Presssitz mit dem Innenring (1) realisierbaren zweiten Abschnitt (12b), wobei die beiden Abschnitte (12a, 12b) des L-förmig ausgebildeten Schenkels (12) des Schleuderbleches (11) über einen Führungsradius (14) miteinander verbunden sind, **dadurch gekennzeichnet, dass** der erste Abschnitt (12a) eine Schrägstellung einnimmt, sodass während der Montage des Schleuderbleches (11) und des zur Anlage bringen der Dichtlippe (9) am ersten Abschnitt (12a) desselben ein Verkanten und/oder Schiefstellen und/oder Umschlagen der Dichtlippe (9) vermieden wird.

2. Abdichtung nach Anspruch 1, **dadurch gekennzeichnet, dass** der Schenkel (12) des Schleuderblechs (11) zunächst einen nach innen geführten, radial außenliegenden ersten Abschnitt (12a) zur Anlage mit der Dichtlippe (9) und nachfolgend einen umgebogenen beziehungsweise zurückgeführten sowie den Führungsradius (14) ausbildenden radial innenliegenden zweiten Abschnitt (12b) für den Presssitz mit dem Innenring (1) aufweist.

3. Abdichtung nach Anspruch 1, **dadurch gekennzeichnet, dass** der Schenkel (12) des Schleuderblechs (11) zunächst einen nach innen geführten, radial innenliegenden ersten Abschnitt (12b) für den Presssitz mit dem Innenring (1) und nachfolgend einen umgebogenen beziehungsweise zurückgeführten sowie den Führungsradius (14) ausbildenden radial außenliegenden zweiten Abschnitt (12a) zur Anlage mit der Dichtlippe (9) aufweist.

4. Abdichtung nach einem der voranstehenden Ansprüche, **dadurch gekennzeichnet, dass** der Winkel "α" in einem Bereich von ca. 5° bis ca. 30° gewählt ist, vorzugsweise ca. 15° beträgt.

## Claims

1. Seal for radial rolling bearings, having an inner ring (1) and having an outer ring (2) and also having rolling bodies (4) arranged therebetween, the seal having a radially arranged sealing element (7) which can extend to the side of the rolling bodies (4) in a free space (5) between the inner ring (1) and outer ring (2) and which has at least one sealing lip (9, 10) and also a baffle plate (11) which can be connected to the inner ring (1) by means of an interference fit,
- the at least one sealing lip (9, 10) coming into contact with the baffle plate (11),
- the sealing element (7) and the baffle plate (11) being components which are formed, and can be mounted, separately from one another,
- the baffle plate (11) being of L-shaped design with a limb (12) that can be aligned towards the rolling bodies (4), which limb (12) has both a first section (12a), against which the sealing lip (9) of the seal element (7) comes to bear, and also a second section (12b) which can realize the interference fit with the inner ring (1), the two sections (12a, 12b) of the L-shaped limb (12) of the baffle plate (11) being connected to one another via a guide radius (14), **characterized in that** the first section (12a) assumes an oblique position, such that during the mounting of the baffle plate (11) and as the sealing lip (9) is brought to bear against the first section (12a) thereof, tilting and/or skewing and/or folding-over of the sealing lip (9) is avoided.

2. Seal according to Claim 1, **characterized in that** the limb (12) of the baffle plate (11) has initially an inwardly guided, radially outer first section (12a) for bearing against the sealing lip (9), and subsequently a bent-over or returning radially inner second section (12b), which forms the guide radius (14), for the interference fit with the inner ring (1).

3. Seal according to Claim 1, **characterized in that** the limb (12) of the baffle plate (11) has initially an inwardly guided, radially inner first section (12b) for the interference fit with the inner ring (1), and subsequently a bent-over or returning radially outer second section (12a), which forms the guide radius (14), for bearing against the sealing lip (9).

4. Seal according to one of the preceding claims, **characterized in that** the angle "α" is selected to be in a range from approximately 5° to approximately 30°, and is preferably approximately 15°.

## Revendications

1. Garniture d'étanchéité pour palier à roulement radial comprenant une bague interne (1) et une bague externe (2) ainsi que des corps de roulement (4) disposés entre elles, la garniture d'étanchéité présentant un élément d'étanchéité (7) pouvant s'étendre latéralement aux corps de roulement (4) dans un espace libre (5) entre la bague interne (1) et la bague externe (2), avec au moins une lèvre d'étanchéité (9, 10) ainsi qu'une tôle centrifuge (11) pouvant être connectée par un ajustement par pressage à la bague interne (1),
- ladite au moins une lèvre d'étanchéité (9, 10) venant en appui contre la tôle centrifuge (11),
- l'élément d'étanchéité (7) et la tôle centrifuge (11) étant des composants réalisés de manière séparée l'un de l'autre et pouvant être montés et
- la tôle centrifuge (11) étant réalisée en forme de L avec une branche (12) pouvant être orientée vers les corps de roulement (4), laquelle branche (12) présentant à la fois une première portion (12a) contre laquelle vient s'appuyer la lèvre d'étanchéité (9) de l'élément d'étanchéité (7), ainsi qu'une deuxième portion (12b) pouvant réaliser l'ajustement de pressage avec la bague interne (1), les deux portions (12a, 12b) de la branche (12) en forme de L de la tôle centrifuge (11) étant connectées l'une à l'autre par le biais d'un rayon de guidage (14), **caractérisée en ce que** la première portion (12a) adopte une position oblique de telle sorte que pendant le montage de la tôle centrifuge (11) et l'application en appui de la lèvre d'étanchéité (9) contre la première portion (12a) de celle-ci, un coincement et/ou un positionnement en biais et/ou un retournement de la lèvre d'étanchéité (9) soient évités.

2. Garniture d'étanchéité selon la revendication 1, **caractérisée en ce que** la branche (12) de la tôle centrifuge (11) présente tout d'abord une première portion (12a) située radialement à l'extérieur, guidée vers l'intérieur, pour l'appui contre la lèvre d'étanchéité (9) et ensuite une deuxième portion (12b) située radialement à l'intérieur, cintrée ou guidée en arrière et réalisant le rayon de guidage (14), pour l'ajustement par pressage avec la bague interne (1).

3. Garniture d'étanchéité selon la revendication 1, **caractérisée en ce que** la branche (12) de la tôle centrifuge (11) présente tout d'abord une première portion (12b) située radialement à l'intérieur, guidée vers l'intérieur, pour l'ajustement par pressage avec la bague interne (1) et ensuite une deuxième portion (12a) située radialement à l'extérieur, cintrée ou guidée en arrière et réalisant le rayon de guidage (14), pour l'appui contre la lèvre d'étanchéité (9).

4. Garniture d'étanchéité selon l'une quelconque des revendications précédentes, **caractérisée en ce que** l'angle "α" est choisi dans une plage d'environ 5° à environ 30°, de préférence vaut environ 15°.
